# FASCICULE DE BREVET EUROPEEN

(11) **EP 2 971 914 B1**
(45) Date de publication et mention de la délivrance du brevet: **08.04.2020**
(21) Numéro de dépôt: 14710851.8
(22) Date de dépôt: 12.03.2014
(51) Int. Cl.: F16L 21/05, F15D 1/14, F16L 55/027

(54) **DISPOSITIF DE RACCORDEMENT POUR TUBES ET BAGUE DE GUIDAGE À CIRCULATION FORCÉE DANS LES ZONES POTENTIELLES DE RÉTENTION**
VERBINDUNGSVORRICHTUNG FÜR ROHRE UND FÜHRUNGSRING MIT ZWANGSUMLAUF BEI POTENZIELLEN RETENTIONSFLÄCHEN
CONNECTING DEVICE FOR TUBES AND GUIDE RING WITH FORCED CIRCULATION IN POTENTIAL RETENTION AREAS

(30) Priorité: 12.03.2013 FR 1352204
(43) Date de publication de la demande: 20.01.2016
(73) Titulaire: Parker Hannifin Manufacturing France SAS, 74112 Annemasse (FR)
(72) Inventeur: LE QUERE, Philippe, 35830 Betton (FR)
(74) Mandataire: Lavialle, Bruno François Stéphane
(86) Numéro de dépôt international: PCT/EP2014/054899
(87) Numéro de publication internationale: WO 2014/140141

(56) Documents cités:
- DE-B- 1 164 766
- FR-A1- 2 920 887
- JP-A- S60 155 002
- US-A- 2 116 705

## Description

La présente invention concerne un dispositif de raccordement pour tubes de manière à conduire un flux de fluide et former un circuit de transport de fluide, tels que ceux décrits dans US 2.116.705 A.

L'invention a également pour objet et une bague de guidage d'une extrémité de tube dans un raccord.

Un dispositif de raccordement pour au moins une extrémité de tube, comprenant un corps tubulaire délimitant un canal ayant au moins un tronçon de réception de l'extrémité de tube. Dans le tronçon de réception est défini un logement annulaire pourvu d'un élément annulaire d'étanchéité agencé pour entourer l'extrémité de tube en laissant une portion de l'extrémité de tube saillir de l'élément d'étanchéité vers un fond du tronçon. La paroi du logement au-delà de l'élément d'étanchéité assure le centrage de la portion de l'extrémité de tube en saillie du joint d'étanchéité et le fond du tronçon est généralement formé d'un épaulement servant de butée s'opposant à l'enfoncement de l'extrémité de tube dans le tronçon de réception. Le dispositif de raccordement comprend en outre un organe de retenue de l'extrémité de tube dans le tronçon de réception. L'organe de retenue est monté en amont du joint d'étanchéité par référence au sens d'introduction de l'extrémité de tube dans le tronçon de réception.

Lorsque du liquide circule dans le circuit de transport de fluide dans lequel le dispositif de raccordement est implanté, du liquide tend à s'introduire et à stagner dans la zone située entre l'épaulement, la portion de l'extrémité de tube en saillie et l'élément d'étanchéité. Cette zone n'étant que peu ou pas accessible au liquide de nettoyage, le liquide ayant stagné n'est pas éliminé et risque de se dégrader et de polluer le fluide devant postérieurement circuler dans le circuit.

Pour obvier à cet inconvénient, il est connu de monter l'élément d'étanchéité entre l'épaulement et la face terminale de l'extrémité de tube. Mais ceci se révèle contraignant du point de vue de la conception du dispositif de raccordement.

Un but de l'invention est d'améliorer l'accessibilité des zones de rétention potentielles.

A cet effet, on prévoit, selon l'invention, un dispositif de raccordement pour au moins une extrémité de tube de manière à conduire un flux de fluide, comprenant un corps délimitant un canal ayant au moins un tronçon de réception de l'extrémité de tube, le tronçon de réception étant pourvu d'un élément d'étanchéité annulaire agencé pour entourer l'extrémité de tube en laissant une portion de l'extrémité de tube saillir de l'élément d'étanchéité vers un fond du tronçon, caractérisé en ce que des moyens de centrage de la portion en saillie sont disposés dans une zone s'étendant entre la surface externe de la portion en saillie, une surface du tronçon en regard et l'élément d'étanchéité, et en ce que les moyens de centrage comportent des éléments de positionnement qui sont agencées pour coopérer avec une surface du tronçon et une surface externe de la portion en saillie et pour délimiter au moins un conduit de balayage de la zone ayant au moins une entrée au voisinage de laquelle s'étend au moins un déflecteur agencé pour introduire dans le conduit de balayage du fluide détourné du flux circulant dans le dispositif et une sortie pour retourner vers le flux le fluide ayant circulé dans le conduit de balayage.

La bague permet, par le déflecteur qui s'étend dans le flux de fluide circulant dans le dispositif, d'introduire dans le conduit de balayage du fluide détourné du flux de fluide, puis permet de ramener, vers le flux, le fluide ayant circulé dans le conduit de balayage. Ainsi, la bague autorise une circulation forcée de fluide dans la zone entourant la portion d'extrémité de tube en saillie de sorte qu'il n'y a pas de fluide stagnant dans cette zone. Lorsqu'un liquide de nettoyage circule dans le dispositif de raccordement, une partie de ce liquide circulera aussi dans ladite zone et nettoiera celle-ci.

De préférence, les moyens de centrage du dispositif comprennent une bague logée dans la zone et, avantageusement, le dispositif dans lequel la bague comprend un anneau reliant des ailettes formant les éléments de positionnement, les ailettes s'étendant en saillie de l'anneau d'une part axialement et d'autre part radialement vers l'intérieur et vers l'extérieur.

La bague laisse ainsi découvertes un maximum des surfaces dans la zone, améliorant les possibilités de nettoyage.

L'invention a également pour objet une bague de centrage d'une extrémité de tube dans un canal d'un dispositif du type précité. La bague comporte des éléments de positionnement qui sont agencés pour coopérer avec une surface du canal et une surface externe du tube et pour délimiter au moins un conduit de balayage ayant au moins une entrée au voisinage de laquelle s'étend au moins un déflecteur agencé pour introduire dans le conduit de balayage du fluide détourné du flux circulant dans le dispositif et une sortie pour retourner vers le flux le fluide ayant circulé dans le conduit de balayage, la bague comprenant un anneau reliant des ailettes formant les éléments de positionnement, les ailettes s'étendant en saillie de l'anneau d'une part axialement et d'autre part radialement vers l'intérieur et vers l'extérieur.

D'autres caractéristiques et avantages de l'invention ressortiront à la lecture de la description qui suit de modes de réalisation particuliers non limitatifs de l'invention.

Il sera fait référence aux dessins annexés, parmi lesquels :

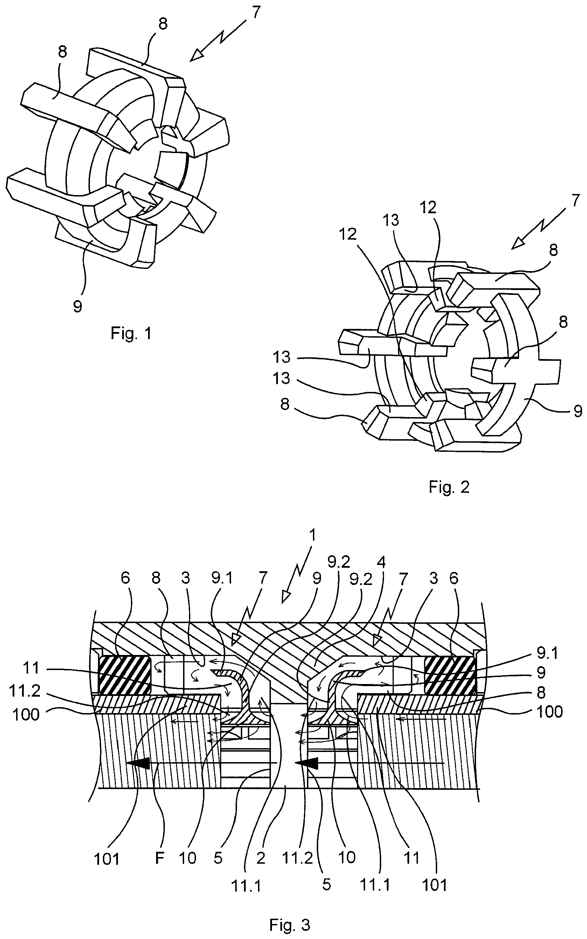

- les figures 1 et 2 sont des vues en perspective, selon des angles de vue différents, de la bague de centrage de l'invention,
- la figure 3 est une demi-vue partielle et en coupe axiale d'un dispositif de raccordement selon l'invention.

En référence aux figures, le dispositif de raccordement conforme à l'invention est ici décrit dans une application au raccordement de deux extrémités de tube 100 l'une à l'autre. Les extrémités de tube 100 et le dispositif de raccordement sont destinés à être implantés dans un circuit de transport de fluide de manière à conduire un flux de fluide.

Le dispositif de raccordement comprend un corps 1 délimitant un canal 2 ayant deux tronçons 3 de réception d'une extrémité de tube 100. Les tronçons de réception 3 s'étendant ici de part et d'autre d'un redan annulaire 4 ayant des faces latérales annulaires constituant des épaulements 5 formant chacun un fond d'un des tronçons de réception 3.

Chaque tronçon de réception 3 est pourvu d'un élément d'étanchéité annulaire 6 agencé pour entourer l'extrémité de tube 100 en laissant une portion 101 de l'extrémité de tube saillir de l'élément d'étanchéité 6 vers l'épaulement 5. Le tronçon de réception 3 a un diamètre supérieur à l'extrémité de tube 100 et l'élément d'étanchéité 6 a un diamètre externe légèrement supérieur au diamètre du tronçon de réception 3 et un diamètre interne légèrement inférieur au diamètre externe de l'extrémité de tube 100 pour être serré entre la surface du tronçon de réception 3 et la surface externe de l'extrémité de tube 100. Chaque tronçon de réception 3 est également pourvu d'un organe, connu en lui-même et non représenté ici, de retenue de l'extrémité de tube 100 dans le tronçon de réception 3. Cet organe de retenue est par exemple une pince, une rondelle dentée d'accrochage...

Dans chaque tronçon de réception 3, une bague, généralement désignée en 7, de centrage de la portion en saillie 101 est logée dans une zone s'étendant entre la surface externe de la portion en saillie 101, la surface du tronçon 3 en regard de ladite portion en saillie 101, l'épaulement 5 et l'élément d'étanchéité 6.

Chaque bague 7 comporte des éléments de positionnement qui sont agencées pour coopérer avec la surface du tronçon de réception 3 et la surface externe de la portion 101. Ces parois de positionnement sont formées par des ailettes 8 radiales reliées entre elles par un anneau 9. Les ailettes 8 s'étendant en saillie de l'anneau 9 d'une part axialement et d'autre part radialement vers l'intérieur et vers l'extérieur.

L'anneau 9 comporte une portion tubulaire 9.1 s'étendant selon l'axe du canal 2 et une portion annulaire 9.2 radiale ayant un pourtour externe solidaire d'une extrémité de la portion tubulaire 9.1 à l'opposé de l'élément d'étanchéité 6. La portion annulaire 9.2 s'étend en saillie de la portion tubulaire 9.1 vers l'intérieur de l'anneau 9.

Les ailettes 8 sont écartées les unes des autres pour délimiter avec la surface externe de l'extrémité de tube 100 et la paroi du tronçon de réception 3 des conduits 11 de balayage de la zone s'étendant entre la surface externe de la portion en saillie 101, la surface du tronçon 3 en regard de ladite portion en saillie 101, et l'élément d'étanchéité 6. Chaque conduit de balayage 11 comprend une entrée 11.1 et une sortie 11.2 (qui sont inversées sur les bagues 7 du fait de leur positionnement relatif inversé par rapport au sens du flux). Au voisinage des entrées 11.1 et sorties 11.2 s'étendent trois déflecteurs 10 solidaires d'une circonférence interne de la portion annulaire 9.2 de l'anneau 9. Chaque déflecteur 10 comprend une partie s'étendant en saillie vers l'intérieur du canal 2 par rapport à une surface interne de l'extrémité de tube 100.

Chaque déflecteur 10 est ici un déflecteur double. En regard de l'entrée 11.1, le déflecteur 10 comprend une portion incurvée s'étendant dans le flux et agencée pour introduire dans le conduit de balayage 11 du fluide détourné du flux. En regard de la sortie 11.2, le déflecteur 10 comprend une portion incurvée s'étendant dans le flux pour retourner dans le flux le fluide détourné ayant circulé dans le conduit de balayage.

Comme indiqué précédemment, les bagues 9 sont disposées symétriquement, l'une en amont et l'autre en aval par rapport à un sens de circulation du flux (indiqué par la flèche F), de telle manière que :
- l'entrée et le déflecteur associé de la bague 9 amont sont orientés à l'encontre du sens de circulation F du flux,
- la sortie et le déflecteur associé de la bague 9 amont sont orientés dans le sens de circulation F du flux en regard de l'entrée et du déflecteur associé de la bague 9 aval qui sont orientés à l'encontre du sens de circulation F du flux,
- la sortie et le déflecteur associé de la bague 9 aval sont orientés dans le sens de circulation F du flux.

Ainsi, le déflecteur de la bague 9 amont détourne une partie du flux vers le conduit de balayage 11 de la bague 9 amont puis, après que le fluide a parcouru ledit conduit de balayage 11, le déflecteur de la bague 9 amont oriente ledit fluide vers l'aval. Le déflecteur de la bague 9 aval est agencé pour diriger le fluide en provenance de l'amont vers le conduit de balayage 11 de la bague aval 9 puis, après que le fluide a parcouru ledit conduit de balayage 11, le réintroduit dans le flux circulant dans le corps 1.

On notera qu'au moins certaines des ailettes 8 ne sont pas en contact avec l'élément d'étanchéité 6 autorisant une partie du fluide à passer d'un conduit de balayage à un autre par un passage ainsi laissé libre entre les ailettes 8 et l'élément d'étanchéité 6.

Les bagues 9 ont au moins une surface extérieure réalisée en un matériau ayant des propriétés bactéricides, par exemple l'argent ou le cuivre, et/ou en un matériau anti-adhérent comme le polytétrafluoroéthylène.

On notera que l'évacuation des conduits de balayage est facilitée par un effet Venturi au niveau de la sortie des conduits de balayage 11. Les déflecteurs 10 sont agencés pour favoriser cet effet Venturi.

On note que les bagues 9 sont en appui contre les épaulements 5 et que les extrémités de tube 100 sont en appui axial contre un épaulement 12 ménagé sur une portion interne de chaque ailette 8. L'extrémité de tube 100 peut ainsi être mise fermement en butée. L'extrémité de tube 100 est positionnée latéralement par les surfaces internes 13 des ailettes 8.

Bien entendu, l'invention n'est pas limitée aux modes de réalisation décrits mais englobe toute variante entrant dans le champ de l'invention telle que définie par les revendications.

En particulier, le corps du raccord peut avoir d'autres formes et par exemple une forme coudée ou une forme en T ; il peut être adapté pour être raccordé à une seule extrémité de tube, deux ou plus de deux extrémités de tube.

Il peut y avoir un déflecteur pour la première extrémité du conduit de balayage et un déflecteur pour la deuxième extrémité du conduit de balayage.

La bague peut être agencée pour définir plusieurs conduits de balayage indépendants ayant par exemple deux portions axiales superposées et réunies l'une à l'autre par une portion radiales, ou plusieurs conduits de balayage interconnectés par une portion circonférentielle.

La bague peut comprendre un unique déflecteur annulaire (ce qui risque toutefois de plus perturber le flux) ou plusieurs déflecteurs séparés et en arc de cercle. Pour chaque conduit de balayage, on peut avoir un unique déflecteur bidirectionnel ou un ou deux déflecteurs unidirectionnels. Ainsi, un déflecteur unidirectionnel unique peut être disposé au niveau de l'entrée du conduit de balayage, la sortie étant dépourvue de déflecteur. Chaque déflecteur peut être dédié à une entrée et/ou une sortie, ou bien commun à deux entrées et/ou deux sorties par exemple.

Les moyens de centrage peuvent être en une seule pièce avec le corps du dispositif de raccordement.

En variante, le corps comporte au moins une portion en matériau transparent, située en regard de ladite zone, permettant de s'assurer visuellement de la circulation effective du fluide ou d'un liquide de nettoyage dans la zone.

## Revendications

1. Dispositif de raccordement pour au moins une extrémité de tube (100) de manière à conduire un flux de fluide, comprenant un corps (1) délimitant un canal (2) ayant au moins un tronçon de réception (3) de l'extrémité de tube (100), le tronçon de réception étant pourvu d'un élément d'étanchéité annulaire (6) agencé pour entourer l'extrémité de tube en laissant une portion de l'extrémité de tube (100) saillir de l'élément d'étanchéité (6) vers un fond du tronçon, **caractérisé en ce que** des moyens de centrage de la portion en saillie sont disposés dans une zone s'étendant entre la surface externe de la portion en saillie, une surface du tronçon (3) en regard et l'élément d'étanchéité (6), et **en ce que** les moyens de centrage comportent des éléments de positionnement qui sont agencés pour coopérer avec une surface du tronçon (3) et une surface externe de la portion en saillie et pour délimiter au moins un conduit de balayage (11) de la zone ayant au moins une entrée au voisinage de laquelle s'étend au moins un déflecteur (10) agencé pour introduire dans le conduit de balayage (11) du fluide détourné du flux circulant dans le dispositif et une sortie pour retourner vers le flux le fluide ayant circulé dans le conduit de balayage (11).

2. Dispositif selon la revendication 1, dans lequel les moyens de centrage comprennent une bague (7) logée dans la zone.

3. Dispositif selon la revendication 2, dans lequel la bague (7) comprend un anneau (9) reliant des ailettes (8) formant les éléments de positionnement, les ailettes (8) s'étendant en saillie de l'anneau (9) d'une part axialement et d'autre part radialement vers l'intérieur et vers l'extérieur.

4. Dispositif selon la revendication 3, dans lequel l'anneau (9) comporte une portion tubulaire (9.1) s'étendant selon l'axe du canal et une portion annulaire (9.2) radiale ayant un pourtour externe solidaire d'une extrémité de la portion tubulaire (9.1) à l'opposé de l'élément d'étanchéité (6), la portion annulaire s'étendant en saillie de la portion tubulaire (9.1) vers l'intérieur de l'anneau (9).

5. Dispositif selon la revendication 4, dans lequel le déflecteur (10) est solidaire d'une circonférence interne de la portion annulaire (9.2).

6. Dispositif selon la revendication 3, dans lequel au moins certaines des ailettes (8) ne sont pas en contact avec l'élément d'étanchéité(6).

7. Dispositif selon la revendication 2, comprenant deux tronçons de réception (3) d'une extrémité de conduite (100) de manière à unir les deux extrémités de conduite (100) via le corps (1) du dispositif, chaque tronçon de réception (3) étant pourvu d'un élément d'étanchéité annulaire (6) et d'une bague de centrage (7) .

8. Dispositif selon la revendication 7, dans lequel les bagues de centrage (7) sont disposées de manière que les déflecteurs (10) des bagues (7) soient décalés angulairement l'un par rapport à l'autre.

9. Dispositif selon la revendication 2, dans lequel la bague (7) a au moins une surface extérieure réalisée en un matériau ayant des propriétés bactéricides, par exemple l'argent ou le cuivre.

10. Dispositif selon la revendication 1, dans lequel la bague (7) a au moins une surface extérieure réalisée en un matériau anti-adhérent comme le polytétrafluoroéthylène.

11. Bague de centrage (7) utilisable comme moyen de centrage d'une extrémité de tube dans un canal d'un dispositif selon l'une quelconque des revendications précédentes, la bague comportant des éléments de positionnement qui sont agencés pour coopérer avec une surface du canal et une surface externe du tube et pour délimiter au moins un conduit de balayage (11) ayant au moins une entrée au voisinage de laquelle s'étend au moins un déflecteur (10) agencé pour introduire dans le conduit de balayage (11) du fluide détourné du flux circulant dans le dispositif et une sortie pour retourner vers le flux le fluide ayant circulé dans le conduit de balayage (11), la bague comprenant un anneau (9) reliant des ailettes (8) formant les éléments de positionnement, les ailettes (8) s'étendant en saillie de l'anneau (9) d'une part axialement et d'autre part radialement vers l'intérieur et vers l'extérieur.

12. Bague selon la revendication 11, dans laquelle l'anneau (9) comporte une portion tubulaire (9.1) s'étendant selon l'axe du canal et une portion annulaire radiale (9.2) ayant un pourtour externe solidaire d'une extrémité de la portion tubulaire (9.1), la portion annulaire (9.2) s'étendant en saillie de la portion tubulaire (9.1) vers l'intérieur de l'anneau (9).

13. Bague selon la revendication 12, dans laquelle le déflecteur (10) est solidaire d'une circonférence interne de la portion annulaire (9.2).

## Patentansprüche

1. Verbindungsvorrichtung für mindestens ein Rohrende (100), um einen Fluidfluss zu leiten, umfassend einen Körper (1), der einen Kanal (2) begrenzt, der mindestens einen Aufnahmeabschnitt (3) zur Aufnahme des Rohrendes (100) hat, wobei der Aufnahmeabschnitt mit einem ringförmigen Dichtungselement (6) versehen ist, das ausgebildet ist, um das Rohrende zu umgeben und dabei einen Teil des Rohrendes (100) von dem Dichtungselement (6) in Richtung eines Bodens des Abschnittes vorstehen zu lassen, **dadurch gekennzeichnet, dass** Zentriermittel zum Zentrieren des vorstehenden Teils in einem Bereich angeordnet sind, der sich zwischen der Außenfläche des vorstehenden Teils, einer gegenüberliegenden Oberfläche des Abschnittes (3) und dem Dichtungselement (6) erstreckt, und dass die Zentriermittel Positionierungselemente umfassen, die ausgebildet sind, um mit einer Oberfläche des Abschnittes (3) und einer Außenfläche des vorstehenden Teils zusammenzuwirken und um mindestens einen Spülkanal (11) zum Spülen des Bereichs zu begrenzen, wobei der Spülkanal mindestens einen Einlass hat, in dessen Nähe sich mindestens ein Deflektor (10) erstreckt, der ausgebildet ist, um in den Spülkanal (11) Fluid einzuleiten, das aus dem Fluss, der in der Vorrichtung fließt, abgeleitet wird, sowie mindestens einen Auslass, um das Fluid, das in dem Spülkanal (11) geflossen ist, zu dem Fluss zurückzuleiten.

2. Vorrichtung nach Anspruch 1, bei der die Zentriermittel einen Ring (7) umfassen, der in dem Bereich untergebracht ist.

3. Vorrichtung nach Anspruch 2, bei der der Ring (7) ein ringförmiges Band (9) umfasst, das Rippen (8) verbindet, die die Positionierungselemente bilden, wobei die Rippen (8) von dem ringförmigen Band (9) einerseits axial und andererseits radial nach innen und nach außen vorstehen,

4. Vorrichtung nach Anspruch 3, bei der das ringförmige Band (9) einen rohrförmigen Abschnitt (9.1) umfasst, der sich entlang der Achse des Kanals erstreckt, sowie einen radialen ringförmigen Abschnitt (9.2), der einen Außenumfang hat, der fest mit einem Ende des rohrförmigen Abschnittes (9.1) gegenüber dem Dichtungselement (6) verbunden ist, wobei der ringförmige Abschnitt von dem rohrförmigen Abschnitt (9.1) ins Innere des ringförmigen Bandes (9) vorsteht.

5. Vorrichtung nach Anspruch 4, bei der der Deflektor (10) fest mit einem Innenumfang des ringförmigen Abschnittes (9.2) verbunden ist.

6. Vorrichtung nach Anspruch 3, bei der zumindest einige Rippen (8) nicht mit dem Dichtungselement (6) in Kontakt stehen.

7. Vorrichtung nach Anspruch 2, umfassend zwei Aufnahmeabschnitte (3) zur Aufnahme eines Leitungsendes (100), um die beiden Leitungsenden (100) über den Körper (1) der Vorrichtung zu verbinden, wobei jeder Aufnahmeabschnitt (3) mit einem ringförmigen Dichtungselement (6) und einem Zentrierring (7) versehen ist.

8. Vorrichtung nach Anspruch 7, bei der die Zentrierringe (7) so angeordnet sind, dass die Deflektoren (10) der Ringe (7) zueinander winkelversetzt sind.

9. Vorrichtung nach Anspruch 2, bei der der Ring (7) mindestens eine Außenfläche hat, die aus einem bakterizide Eigenschaften aufweisenden Material, beispielsweise Silber oder Kupfer, hergestellt ist.

10. Vorrichtung nach Anspruch 1, bei der der Ring (7) mindestens eine Außenfläche hat, die aus einem Antihaft-Material wie z. B. Polytetrafluorethylen hergestellt ist.

11. Zentrierring (7), der als Zentriermittel zum Zentrieren eines Rohrendes in einem Kanal einer Vorrichtung nach einem der vorhergehenden Ansprüche verwendbar ist, wobei der Ring Positionierungselemente umfasst, die ausgebildet sind, um mit einer Oberfläche des Kanals und einer Außenfläche des Rohrs zusammenzuwirken und mindestens einen Spülkanal (11) zu begrenzen, der mindestens einen Einlass hat, in dessen Nähe sich mindestens ein Deflektor (10) erstreckt, der ausgebildet ist, um in den Spülkanal (11) Fluid einzuleiten, das aus dem Fluss, der in der Vorrichtung fließt, abgeleitet wird, und einen Auslass, um das Fluid, das in dem Spülkanal (11) geflossen ist, zu dem Fluss zurückzuleiten, wobei der Ring ein ringförmiges Band (9) umfasst, das die Rippen (8) verbindet, die die Positionierungselemente bilden, wobei die Rippen (8) von dem ringförmigen Band (9) einerseits axial und andererseits radial nach innen und nach außen vorstehen.

12. Ring nach Anspruch 11, bei dem das ringförmige Band (9) einen rohrförmigen Abschnitt (9.1) umfasst, der sich entlang der Achse des Kanals erstreckt, sowie einen radialen ringförmigen Abschnitt (9.2), der einen Außenumfang hat, der fest mit einem Ende des rohrförmigen Abschnittes (9.1) verbunden ist, wobei der ringförmige Abschnitt (9.2) von dem rohrförmigen Abschnitt (9.1) ins Innere des ringförmigen Bandes (9) vorsteht.

13. Ring nach Anspruch 12, bei dem der Deflektor (10) fest mit einem Innenumfang des ringförmigen Abschnittes (9.2) verbunden ist.

## Claims

1. A connection device for at least one tube end (100) so as to convey a fluid flow, the device comprising a body (1) defining a channel (2) having at least one tube end reception segment (3), the reception segment being provided with an annular sealing element (6) arranged to surround the tube end (100) while leaving a portion of the tube end projecting from the sealing element (6) towards an end of the segment (3), the device being **characterized in that** centering means for the projecting portion are arranged in a zone extending between the outer surface of the projecting portion, a facing surface of the segment (3), and the sealing element (6), and **in that** the centering means include positioning elements that are arranged to co-operate with a surface of the segment (3) and an outer surface of the projecting portion and to define at least one sweeping duct (11) for sweeping the zone, the duct having at least one inlet in the vicinity of which there extends at least one deflector (10) arranged to insert, into the sweeping duct (11), fluid diverted from the flow traveling through the device, and at least one outlet for returning the fluid that has passed through the sweeping duct back to the flow.

2. A device according to claim 1, wherein the centering means comprise a ring (7) housed in the zone.

3. A device according to claim 2, wherein the ring (7) comprises a band (9) connecting together fins (8) forming the positioning elements, the fins (8) projecting from the band (9) firstly axially, and secondly radially both towards the inside and towards the outside.

4. A device according to claim 3, wherein the band (9) has a tubular portion (91) extending along the axis of the channel and a radial annular portion (92) having an outer periphery secured to one end of the tubular portion (91) opposite from the sealing element (6), the annular portion (91) projecting from the tubular portion towards the inside of the band (9).

5. A device according to claim 4, wherein the deflector (10) is secured to an inner circumference of the annular portion (92).

6. A device according to claim 3, wherein at least some of the fins (8) are not in contact with the sealing element (6).

7. A device according to claim 2, including two pipe end reception portions (3) so as to unite the two pipe ends (100) via the body (1) of the device, each reception portion (3) being provided with an annular sealing (6) element and with a centering ring (7).

8. A device according to claim 7, wherein the centering rings (7) are arranged in such a manner that the deflectors (10) of the rings (7) are angularly offset relative to one another.

9. A device according to claim 2, wherein the ring (7) has at least one outer surface made of a material having bactericidal properties, e.g. silver or copper.

10. A device according to claim 1, wherein the ring (7) has at least an outside surface made of a non-stick material such as polytetrafluoroethylene.

11. A centering ring (7) usable as centering means for centering a tube end in a channel of a device according to any preceding claim, the ring comprising positioning elements that are arranged to co-operate with a surface of the channel and an outer surface of the tube and to define at least one sweeping duct (11) having at least one inlet in the vicinity of which there extends at least one deflector (10) arranged to insert, into the sweeping duct (11), fluid diverted from the flow traveling in the device, and at least one outlet for returning the fluid that has passed through the sweeping duct (11) back to the flow, the ring including a band (9) connecting together fins (8) forming the positioning elements, the fins (8) projecting from the band (9) both axially and also radially inwards and radially outwards.

12. A ring according to claim 11, wherein the band (9) has a tubular portion (91) extending along the axis of the channel and a radial annular portion (92) having an outer periphery secured to an end of the tubular portion (91), the annular portion (92) projecting from the tubular portion (91) towards the inside of the band (9).

13. A ring according to claim 12, wherein the deflector (10) is secured to an inner circumference of the annular portion (92).
